# EUROPEAN PATENT APPLICATION

(11) **EP 0 732 679 A1**
(43) Date of publication of application: **18.09.1996**
(21) Application number: 96301775.1
(22) Date of filing: 15.03.1996
(51) Int. Cl.: G09F 9/00, B60K 35/00, B60Q 3/04

(54) **Display panel for instruments installed in vehicles**

(30) Priority: 16.03.1995 JP 83483/95
(71) Applicant: Hayashi Telempu Co., Ltd., Nagoya-shi, Aichi 460 (JP); Koike, Yasuhiro, Yokohama-shi, Kanagawa 225 (JP)
(72) Inventor: Nonoyama, Naoaki, Anjo-shi, Aichi, 446 (JP); Sakai, Takeya, Aichi, 470-01 (JP); Izuhara, Megumi, Nisshin-shi, Aichi, 470-01 (JP); Hattori, Yukitoshi, Nagoya-shi, Aichi 465 (JP); Koike, Yasuhiro, Yokohama-shi, Kanagawa, 225 (JP)
(74) Representative: Billington, Lawrence Emlyn

(57) **Abstract**

A display panel (10) of a speedometer includes a scattering light guide (50), a light source (LED, small incandescent lamp, etc.) La - Lc, a transparent sheet (60), and a pointer (16) having a rotation shaft (15). A masking (14) is printed on the colorless or colored transparent sheet (60). The shape of a notched part of the masking (14) forming the shining part (13) is defined in response to the display contents such as a speed scale, numerals, letters, etc. The disk-shaped scattering light guide (50) having an axis K has a center portion (51) having a uniform thickness and a tapered peripheral portion (52). Light source receiving holes (53a-53c) for receiving the light source elements La - Lc are disposed around a pointer passing hole (54). The displaying light exits mainly from the tapered periphery portion (52). In a case where a shining part (13) is required in the vicinity of the center portion (51), stipples (57) are formed on a part of the back side by blasting, so that a displaying light is produced by exiting from the scattering light guide (50).

## Description

The present invention relates to a display panel for instruments installed in vehicles such as motor cars, airplanes, ships etc., or for the other devices similar to them, more particularly, relates to a display panel provided with a back light for illuminating display information from the back side thereof. Moreover, various kinds of instruments installed in vehicles and other devices similar to them are referred to as "instruments" for a general name in this specification.

There are installed in motorcars, airplanes, ships, etc., equipments provided with a display device for displaying various kinds of information such as a speed meter, a navigation system, an altimeter, an operation panel of an air conditioner, a tuning operation portion of a radio, etc. It is well known that a back light illumination mechanism for facilitating the perception of display at night, in a tunnel, etc., is built in the display panel for use in those instruments. The construction and the characteristics of conventional illumination mechanisms are described with examples of a speed meter and an operating portion of the air conditioner.

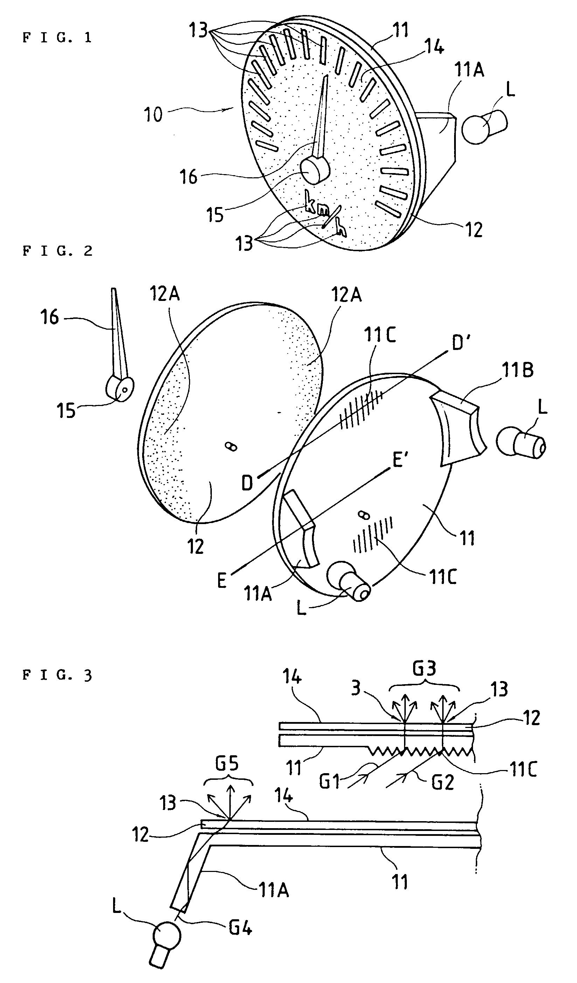

In Figs. 1 to 3, there are illustrated a schematic construction of a conventional display panel of a speed meter. Fig. 1 shows an external appearance viewing from the front side (observing side) together with a light source element and Fig. 2 shows an external appearance viewing from the back side (light incident side) in an element-exploded manner. Fig. 3a and Fig. 3b are sectional views taken along the line DD' and the line EE' in Fig. 2, respectively.

Referring to these drawings, a display panel of a speed meter represented as a whole by reference numeral 10 is constituted of a plate shape transparent light guide 11 made of an acryl resin, etc., two light source elements (incandescent lamp) L arranged at the back side of the transparent light guide 11, a diffusing sheet 12 arranged so as to overlap on the front side surface of the transparent light guide 11, a masking 14 having notch parts corresponding to shining parts 13, and a pointer 16 turning around a rotation shaft 15. The illustration of a rotation mechanism of the pointer 16 is omitted.

The masking 14 is usually made of a light shielding ink layer which is printed on the diffusing sheet 12. The shape of notch parts of the masking 14 which form the shining part 13 are defined according to the display contents of speed scale marks, numerals, and letters, etc. A transparent ink layer having a desired color is printed on the diffusing sheet 12 corresponding to this notch part.

Stipples 11C for guiding light to the front side based on edge lighting effect are formed on the surface of the transparent light guide 11 distant from the light source element L. As illustrated in Fig. 3a, a part of the light (represented as G1, G2) entering obliquely into the stipples 11C travels from the stipples 11C to the diffusing sheet 12. A scattered display light G3 is generated at the shining part 13 on which the masking 14 does not exist.

On the other hand, backward projecting parts 11A, 11B are disposed on left and right end portions of the transparent light guide 11 near the light source elements L, L. As illustrated in Fig. 3b, a strong light G4 is guided to the backward projecting part 11A (or 11B) with internal reflections repeated and then guided to a flat plate part of the transparent light guide 11. An attenuation print 12A for preventing the shining part 13 from becoming too bright locally is formed on a back surface part of the diffusing sheet 12 in the vicinity of the backward projecting parts 11A, 11B.

In this way, in conventional display panels of speed meter, additional constructions (diffusing sheet, stipples, backward projecting parts, attenuation print, etc.) are necessary in order to provide uniform and sufficient brightness for the shining parts.
Furthermore, it cannot be said that the efficiency of light is high, which makes difficult to use a light source element of a small size and a small electric power. As a result, limitations are given to simplification of the construction of the display panel, reduction in the size for the depth, saving of the manufacturing cost, and so on.

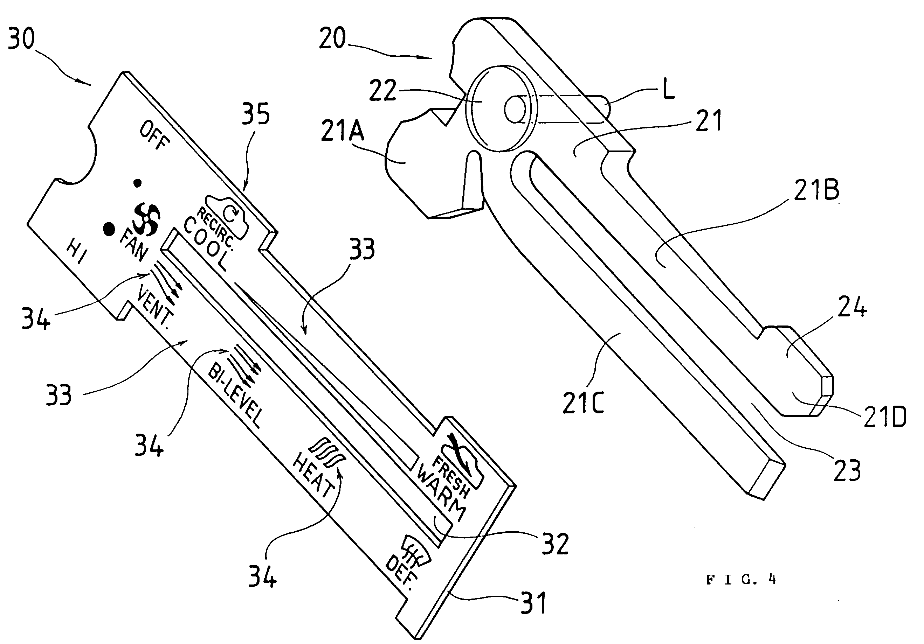

Next, as a typical example of display panel of the operating portion of a device installed in a car, a conventional construction of an operating portion for ON/OFF operation, cooling/heating changeover and the air temperature adjustment of a conditioner are described hereinafter with reference to Fig. 4.

Fig. 4 is a schematic element-exploded view of the construction of display panel of the operating portion of a conventional air conditioner. Classifying roughly, the display panel is constituted of a back light illuminating portion 20 and a main body 30 arranged so as to contact closely to the front side surface of the back light illuminating portion 20. The back light illuminating portion 20 includes a light source element (incandescent lamp) L and a transparent light guide 21 made of an acrylic resin.

The transparent light guide 21 has a base part 21A and extending parts 21B, 21C. A wide part 21D is disposed on a leading end of the extending part 21B. A U-shape space 23 between both of the extending parts 21B, 21C aims to let an operating lever (not shown) pass movably in the lateral direction. A hole 22 for receiving a light emitting part of the light source element L disposed on the base part 21A. Stipples 24 for transforming the light guided in the transparent light guide due to edge lighting effect into a back light illuminating light is disposed on the wide part 21D positioned at a portion distant from the light source element L.

On the other hand, a scattering sheet 31 is used as a base plate of the main body 30. A masking 33 made of a light shielding ink layer is formed on a surface of the scattering sheet 31 except the portion which forms a shining part 34. The shining part 34 may include desired letters such as HEAT, VENT, etc. Reference numeral 32 denotes a long and narrow opening disposed so as to be juxtaposed with the space 23 between the extending parts of the transparent light guide, through which the operating lever (not shown) is disposed movably in the lateral direction. A printing having an appropriate light shielding function is realized on an back surface part 35 of the scattering sheet 31 in the vicinity of the light source element L.

The greater part of the light from the light source element L enters into the transparent light guide 21 from a peripheral portion of the hole 22 and is guided to the base part 21A, the extending parts 21B, 21C and the wide part 21D accompanied with the internal reflection. In this process, the light is guided toward a front surface of the main body 30 due to the function of the scattering sheet 31 and the stipples formed on the wide part 21D of the main body 30.

Thus, in display panels of the operating portion of conventional air conditioners, similarly to the case of display panels of speed meters, additional constructions (scattering sheet, stipples, extinct printing, etc.) are required in order to ensure a uniform and sufficient brightness on the shining parts. Moreover, it cannot be said that the efficiency of the light is high, which makes it difficult to use a light source element of a small size and a small electric power. As a result, similarly to the case of speed meters, limitations are given to the compactness of the construction of the display, reduction of manufacturing cost, and so on.

As described above with examples of a speed meter and operating portion of an air conditioner, conventional display panels require various additional constructions in order to ensure the uniformity and quantity of the brightness which contributes to the displaying, which makes it difficult to provide a display panel which is thin and compact in construction and is low in manufacturing cost. There are such problems commonly in display panels for use in instruments and the other devices similar thereto installed in vehicles.

An embodiment of the present invention may realise a compact and thin construction in a display panel of instruments installed in vehicles. It may also provide an electric power saving type display panel which facilitates ensuring of the quantity of light which contributes to the displaying and which is adapted to use small-sized and electric power saving source elements.

According to the present invention, there is provided a display panel for an instrument, in which a shining part for displaying information is formed by using a primary light source means and a plate-shape light guide optically coupled to said primary light source means, wherein at least a part of the light guide is constituted by a scattering light guide which has a region tending to reduce in thickness as distance increases away from the position at which the optical coupling occurs, and at least a portion of the shining part is provided by light exiting from said region.

The optical coupling with a primary light source may occur in a hole or recess disposed in the scattering light guide. The optical coupling may occur by disposing a sideward reflecting part for deflecting the light to an extending direction of the scattering light guide in the hole or recess.

The optical coupling may occur at an edge part of the scattering light guide. On this occasion, a cut part may be disposed on the edge part. Further, it is preferable that a light emitting diode for generating an incident light flux coordinately directed to the scattering light guide is adopted as the primary light source means.

As a means for preventing the light which does not contribute to the displaying from exiting from the scattering light guide, at least a part of the portion which does not correspond to the shining part may be coated with a layer having a refractive index lower than that of the scattering light guide.

The basic characteristics of the display panel according to the present invention reside in that the scattering light guide having a region having a tendency of reducing in thickness corresponding to the distance from the part at which the light-coupling occurs is used as a means for transforming the light emitted from the primary light source into the displaying light. For example, in a case where the optical coupling occurs on a center portion, a taper shape or wedge shape is given to the peripheral portion. In another case where the optical coupling occurs on a peripheral portion, a taper shape or wedge shape is given to a center portion or its peripheral region.

In order to improve the efficiency of the optical coupling of the scattering light guide and the primary light source means, the following measures may be applied.
(1) One or more holes are disposed in the scattering light guide for receiving the primary light source means.
(2) A reflecting part for converting a light propagating direction is disposed in the hole disposed on the scattering light guide.
(3) In a case where the optical coupling occurs on an edge part of the scattering light guide, a cut part is disposed on the edge part. Further, a light emitting diode for generating the incident light flux directed coordinately to the scattering light guide may be adopted as the primary light source means.

It is preferable that the layer having the refractive index lower than that of the scattering light guide is coated onto at least the part of the portion which does not correspond to the shining part as means for preventing the light which does not contribute to the displaying from exiting from the scattering light guide. In this case, there is only a little leakage from the high refractive index medium (scattering light guide) to the low refractive index medium (coating layer). Accordingly, if a light shielding layer is formed outside the coating layer, absorption loss is avoided.

If a display panel according to the present invention is applied to the display panel of various kinds of the instruments installed in motorcars, airplanes, ships, etc., a thin construction which ensures the displaying light with a high efficiency is realized, through which the manufacturing cost and the consumption of electric power can be reduced. Further, since the scattered exiting light from the scattering light guide is used as the displaying light, "soft displaying light" can be obtained without additional constructions such as light diffusing sheet, and so on.
Fig. 1 is a schematic view of a display panel of a conventional speed meter, viewing from the front side (observation side) thereof;
Fig. 2 is a view of a schematic view of a display panel of a conventional speed meter, viewing from the back side (light incident side) thereof, which is shown in an element-exploded manner;
Fig. 3a is a sectional view taken along the line DD' in Fig. 2, and Fig. 3b is a sectional view taken along the line EE' in Fig. 2;
Fig. 4 is a schematic view of a display panel of the operating portion of a conventional air conditioner, which is shown in an element-exploded manner;
Fig. 5 is a view of a schematic view of a display panel according to the first embodiment, which is shown in an element exploded manner;
Fig. 6 is a view of the front side (light exiting side) of the scattering light guide for use in the first embodiment;
Fig. 7 is a diagram to explain the behavior of the light in the scattering light guide by using the sectional view taken along the line AA' of Fig. 6;
Fig. 8 is a diagram to illustrate optical coupling exhibited in a case where the shape of a hole disposed on the scattering light guide is devised;
Fig. 9 is a diagram to explain the optical coupling realized by receiving a light emitting diode (LED) in the hole disposed on the scattering light guide;
Fig. 10a is a view of the main part of the second embodiment viewing from the back side thereof and Fig. 10b is a view of the same main part viewing from the front side thereof;
Fig. 11a is a view of the main part of the third embodiment viewing from a back side thereof and Fig. 11b is a view of the same main part viewing from the front side thereof;
Figs. 12a, 12b, 12c are views of illustrating examples of cuts formed on an end face of a corner of the scattering light guide in order to improve efficiency of the optical coupling;
Figs. 13a and 13b are views to explain examples in which a cap construction of a light emitting diode (LED) is improved in order to improve efficiency of the optical coupling exhibited when the LED is used as a primary light source in the display panel according to the present invention;
Fig. 14a is a view of the main part of the fourth embodiment viewing from the back side thereof and Fig. 11b is a view of the same main part viewing from the front side thereof;
Fig. 15 is a partially cutaway and enlarged sectional view of a display panel of the fifth embodiment;
Fig. 16 is a perspective view showing the sixth embodiment in which the invention is applied to a display panel of the operating portion of an air conditioner; and
Fig. 17 is a simplified sectional view taken along a plane shown by the symbol A in Fig. 16.

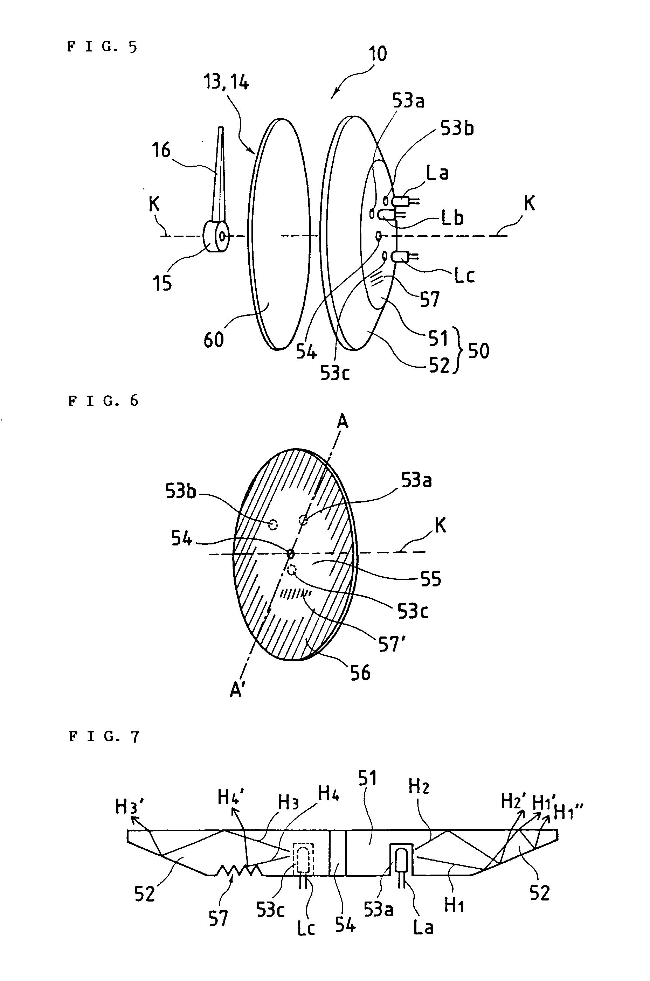

First, referring to Figs. 5 to 8, the first embodiment in which the invention is applied to a display panel of a speed meter is described. In respective drawings, a part of the reference numerals used in the conventional example are diverted thereto.

In the respective views, a display panel of a speed meter specified by as a whole reference numeral 10 is constituted of a scattering light guide 50, three light source elements (LED, small-sized incandescent lamp, etc.) La - Lc, a transparent sheet 60 arranged so as to overlap on the front side surface of the scattering light guide 50 and a pointer 16 turning around a rotation axis 15. Moreover, the existences of a masking 14 disposed on the front side surface of the transparent sheet 60 and the shining parts 13 corresponding to the notch parts of the transparent sheet 60 are shown by only the reference numerals thereof.

The masking 14 is arranged in a similar manner to that of Fig. 1 except that the masking 14 is printed on the transparent sheet 60. Similarly, a shape of the notch parts of the masking 14 which forms the shining part 13 is defined according to the display contents such as speed scales, numerals, letters, etc. Moreover, the transparent sheet 60 may be made of a colorless transparent sheet or a colored transparent sheet. For example, similarly to the example shown in Fig. 1, a transparent ink layer with a desired color may be printed on a portion corresponding to the notch portion of the masking 14.

The scattering light guide 50 shaped into a disk having an axis K corresponding to the rotation shaft 15 is constituted of a center portion 51 having a uniform thickness and a periphery portion 52 shaped in a taper having a tendency of reducing in thickness in the radial direction. A hole 54 through which a driving shaft (not shown) of the pointer 16 is formed on the center portion 51 at the center thereof, at a periphery portion of which the appropriate number (three in this embodiment) of the light source receiving holes 53a - 53c are formed. The respective light source receiving holes 53a - 53c receive small-sized light source elements La, Lb and Lc.

Reference numeral 57 denotes stipples formed by a blast processing on a part of the back side surface of the center portion 51. This stipples 57 are disposed appropriately in a case where not only a peripheral portion of the display panel but also a portion in the vicinity of the center portion, etc. are required to provide a shining part 13 (Refer to "km/h" in Fig. 1).

Generally, the scattering light guide 50 is made of a material having a refractive index ununiform structure in which different refractive index particles are distributed uniformly in the transparent matrix. On this occasion, there is used the material in which fine particles (particle diameter of 2µm) made of a silicone resin as different refractive index particles are distributed in the matrix made of poly (methyl methacrylate) (PMMA) uniformly at a rate of 0.07wt%.

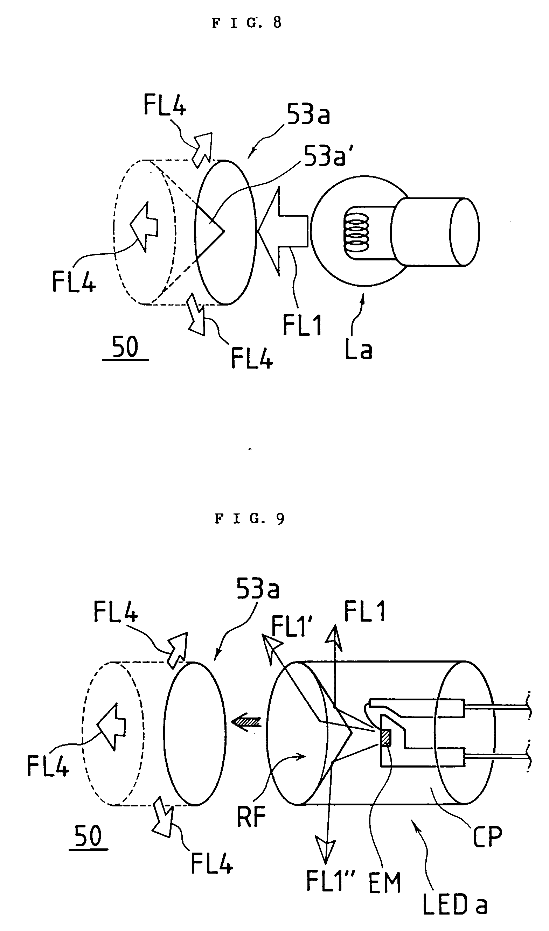

Especially, referring to Fig. 7, the behavior of the light exhibited in the scattering light guide 50 will be understood.

In order to simplify the explanation, the propagation of the light which experiences no scattering in the scattering light guide 50 is exemplified by four light beams in Fig. 7. The behavior of respective light beams are as follows:
[H1; the light which exits from the light source element La or the other light source element and enters into an inclination face of the taper shape peripheral portion 52]

The representative light in this path enters into the front side surface of the scattering light guide 50 at a relatively small angle after it reflects at the inclination surface. If this inclination angle is less than the critical angle (about 42° in a case where PMMA matrix is used), a part of the light corresponding thereto exits as an illuminating light H1' from the scattering light guide 50. Even if it is not less than the critical angle at the first entrance, a smaller incident angle will be obtained at the time of the second or the subsequent entrance, so that there is a high probability that the light exits from the scattering light guide 50 as the illuminating light H1'.

In the description below, when the incident angle of the light entering into a surface of the scattering light guide 50 from inside is less than the critical angle, it is expressed by "the escaping condition is satisfied", or the like.
[H2, H3; the light which exits from the light source element Lc or the other light source element and enters into the front side surface of the scattering light guide 50]

The representative light in this path enters into the front side surface of the scattering light guide 50 at a relatively large angle, wherein there is a high probability that the total reflection is realized. The greater part of the light reflected totally enters again into the front side surface of the scattering light guide 50 after it reflects at the inclination surface of the periphery portion 52. Since the incident angle at this time is less than the last incident angle, similarly to the case of the light beam H1, there is a high probability that the escaping condition is satisfied and then the light corresponding thereto exits from the scattering light guide 50 as the illuminating lights H2', H3'. If the escaping condition is not satisfied at the first entrance, the smaller incident angle is obtained at the time of the second (or subsequent) entrance, so that there is a high probability that the light exits from the scattering light guide 50 as the illuminating light.
[H4; the light which exits from the reflecting light source element Lc or the other light source element, and enters into the stipples 57]

The greater part of the respective light in this path is changed in direction greatly at the stipples 57 and is directed to the front side surface of the scattering light guide 50, entering thereinto at a small incident angle not greater than the critical angle. Accordingly, there is a high probability that the escaping condition is satisfied, so that the light corresponding thereto exits from the scattering light guide 50 as the illumination lights H2', H3'.

In the above description, no scattering in the scattering light guide 50 is taken account into consideration. In a case where the scattering in the scattering light guide 50 is taken account into consideration, the light with a diffusing angle to some extent in the propagating directions of the respective light beams should be considered. The reason is that the scattering power caused by the fine refractive index ununiform structure (different refractive index particles in this embodiment) distributed in the scattering light guide 50 shows basically a forward scattering. However, when the size (the diameter of particles having different refractive indexes) of individual refractive index ununiform structure becomes small (for example, not greater than 0.01µm), a tendency of reducing in the degree forward scattering grows.

Therefore, for example, in case of distributing a large quantity of different refractive index particles less than 0.1µm greatly, the light from the light sources La - Lc may not be sent up to the peripheral portion 52 sufficiently. Then, it is preferable that the density and the size of the refractive index ununiform structures distributed in the scattering light guide 50 are adjusted in such a manner that the light exiting from the light source elements La - Lb are sent sufficiently to the peripheral portion 52. Generally, it is preferable that the larger the size of the scattering light guide 50 is, the smaller the density of the refractive index ununiform structures is.

In this embodiment, in a case where the refractive index ununiform structures are made of different refractive index particles, the density of the refractive index ununiform structures is adjusted according to the addition rate of the different refractive index particles. Tables 1 and 2 show some preferable examples of materials employed as polymer matrix of the scattering light guide 50 used in display panels of speed meters of a usual size. As different refractive index particles, silicone type micro particles, for example, are available.

**Table 1**

| Category | Name of Polymer | Refractive Index |
|---|---|---|
| MA | 1. PMMA [polymethyl methacrylate] | 1.49 |
| | 2. PEMA [polyethyl methacrylate] | 1.483 |
| | 3. Poly(nPMA) [poly-n-propyl methacrylate] | 1.484 |
| | 4. Poly(nBMA) [poly-n-butyl methacrylate] | 1.483 |
| | 5. Poly(nHMA) [poly-n-hexyl methacrylate] | 1.481 |
| | 6. Poly(iPMA) [polyisopropyl methacrylate] | 1.473 |
| | 7. Poly(iBMA) [polyisobutyl methacrylate] | 1.477 |
| | 8. Poly(tBMA) [poly-t-butyl methacrylate] | 1.463 |
| | 9. PCHMA [polycyclohexyl methacrylate] | 1.507 |
| XMA | 10. PBzMA [polybenzyl methacrylate] | 1.568 |
| | 11. PPhMA [polyphenyl methacrylate] | 1.57 |
| | 12. Poly(1-PhEMA) [poly-1-phenylethyl methacrylate] | 1.543 |
| | 13. Poly(2-PhEMA) [poly-2-phenylethyl methacrylate] | 1.559 |
| | 14. PFFMA [polyfurfuryl methacrylate] | 1.538 |
| A | 15. PMA [polymethyl acrylate] | 1.4725 |
| | 16. PEA [polyethyl acrylate] | 1.4685 |
| | 17. Poly(nBA) [poly-n-butyl acrylate] | 1.4535 |
| XA | 18. PBzMA [polybenzyl acrylate] | 1.5584 |
| | 19. Poly(2-CIEA) [poly-2-chloroethyl acrylate] | 1.52 |

**Table 2**

| Category | Name of Polymer | Refractive Index |
|---|---|---|
| AC | 20. PVAc [polyvinyl acetate] | 1.47 |
| XA | 21. PVB [polyvinyl benzoate] | 1.578 |
| | 22. PVAc [polyvinyl phenyl acetate] | 1.567 |
| | 23. PVClAc [polyvinyl chloroacetate] | 1.512 |
| N | 24. PAN [polyacrylonitrile] | 1.52 |
| | 25. Poly(αMAN) [poly-α-methyl acrylonitrile] | 1.52 |
| α-A | 26. PMA(2Cl) [polymethyl-α-chloroacrylate] | 1.5172 |
| St | 27. Poly(o-C1St) [poly-o-chlorostyrene] | 1.6098 |
| | 28. Poly-(p-FSt) [poly-p-fluorostyrene] | 1.566 |
| | 29. Poly(o, p-FSt) [poly-o-, p-difluorostyrene] | 1.475 |
| | 30. Poly(p-iPSt) [poly-p-isopropyl styrene] | 1.554 |
| | 31. PSt [polystyrene] | 1.59 |
| C | 32. PC [polycarbonate] | 1.59 |

Due to such characteristics of the scattering light guide 50 having a taper shape peripheral portion 52, a shining part 56 is formed at the front side of the peripheral portion 52 of the scattering light guide 50 when the light source elements La - Lc are turned on, as shown in Fig. 6. A shining part 57' is formed also on the back side of the center portion 51 on which the stipples 57 is formed. Only a little quantity of light leaks from the other part.

The first embodiment described above has the following advantages reflecting the features of the invention.
1. Since the backward projecting parts in the conventional example (see reference numerals 11A, 11B in Fig. 2) become unnecessary, display panels can be simplified and made thin.
2. The greater part of the light entering into the scattering light guide 50 is transmitted to the peripheral portion 52 and then exits therefrom. In a case where a part of the center portion 51 is required to be a shining part 57', stipples 57 are formed on the back side part thereof. Thus, the light in the guide 50 is prevented from exiting from the area which does not contribute to the displaying.
3. The optical coupling with the scattering light guide 50 can be improved by surrounding the light source elements (light emitting part) La - Lc by the inner walls of the receiving holes 53a - 53c.

In order to further improve the efficiency of the optical coupling of the primary light source and the scattering light guide, the following means may be adopted for the optical coupling regions of both of them. Here, for convenience' sake, the constructions and the reference numerals in the first embodiment are cited as required.

### [I] The shape of the inner wall of the holes formed in the back side of the scattering light guide is devised, thereby obtaining such a reflecting property as to guide the light sideward.

According to this means, even if the light source elements La - Lc are arranged outside the holes 52a - 53c, the efficiency of the optical coupling can be maintained high. Fig. 8 is a view to explain one example to which this means is applied in such a manner that the light source elements are arranged outside the holes 53a - 53c. Since respective holes 53a - 53c are equivalent in construction and function with each other, only the hole 53a and the light source element La for supplying the light to the hole 53a are shown in Fig. 8.

A sideward reflecting part 53a' of the scattering light guide 50 formed as a conical projection is disposed inside the hole 53a, and the light source element La is arranged coaxially outside the hole 53a. The greater part FL1 of the light flux radiated from the light source element La is reflected at the surface of the sideward reflecting part 53a' inside the hole 53a, then transformed to the light flux FL4 travelling toward all around radial directions. Since the light flux FL4 enters into the cylindrical inner wall of the hole 53a substantially vertically thereto, it is introduced into the scattering light guide 50 with a high efficiency.

Some of the light reflected at the cylindrical inner wall is introduced to the scattering light guide 50 through various paths. Moreover, treatments for improving the reflecting property may be applied on the surface thereof in order to improve the reflecting function of the sideward reflecting part 53a'. Generally, the light source element La may be an incandescence lamp (bulb), LED, or the like. However, as described in the following [2], it is preferable that the light source element having a radial directivity is used in order to make efficient use of the sideward reflecting part 53a'. As such a light source element, LEDs having a radial directivity are known.

### [2] The light source element received in the receiving hole is devised to cause the sideward radial directivity.

Fig. 9 is a view to explain an example in which this means is applied to an arrangement for receiving light emitting diodes (LEDs) in the holes 53a - 53c. Since respective holes 53a - 53c are equivalent in construction and function with each other, only the hole 53a and the light source element LEDa for supplying the light to the hole 53a are shown in Fig. 9.

The LEDa used in this embodiment is characterized by a cap part CP. That is, a conical recess shape sideward reflecting part RF is disposed on the cap part CP. The light fluxes FL1, FL1', FL1" radiated forward from a light emitting part EM of LEDa are reflected at the sideward reflecting part RF, then transformed to the light fluxes FL4 which are travelling toward all around radial directions. Since the reflection at the sideward reflecting part RF is caused by the entrance from the high refractive index material side, the greater part of the light can be totally reflected if the inclination of the sideward reflecting part RF is made large to some extent.

For example, in a case where the material of the cap is made of an epoxy resin (refractive index of about 1.56), the critical angle is about 40°. If the inclination of the sideward reflecting part RF is made larger than this angle, the light beam directed forward from the light emitting part EM is reflected totally at the sideward reflecting part RF. An inclination of about 45° is advantageous to introduce the light from the inner periphery walls of the receiving holes 53a - 53c into the scattering light guide 50.

Accordingly, it is preferable that the inclination of the sideward reflecting part RF is made about 45° and the material of the cap has a refractive index equal or larger than that of the epoxy resin.

According to this means, the light is introduced efficiently into the scattering light guide along the extending direction of the scattering light guide. That is, the advantage exhibited in a case where the light source element is received inside the hole formed in the scattering light guide (i.e. the above-mentioned advantage 3) is made striking.

Next, the second and the third embodiments are described, in which the construction having an optical coupling part for a primary light source and a scattering light guide at the edge part of the scattering light guide is applied to a speed meter. Since these two embodiments and the first embodiment are different only in the optical coupling part for the scattering light guide and the primary light source, the illustration and the explanation for the other features are omitted.

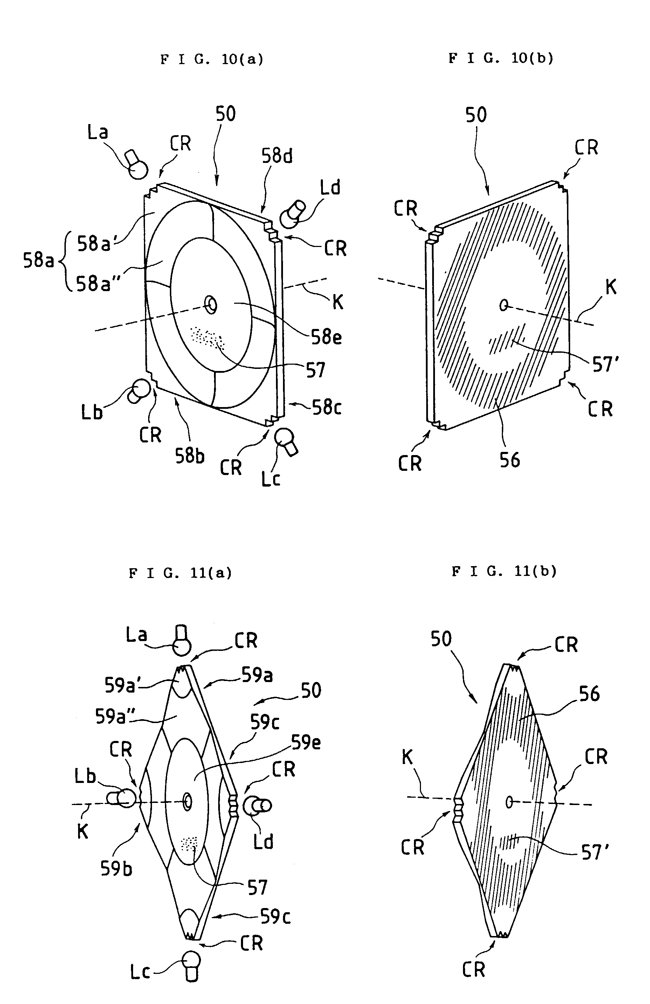

Fig. 10a is a view of the main part of the second embodiment viewing from the back side thereof and Fig. 10b is a view of the same viewing from the front side thereof. The scattering light guide 50 used in this embodiment comprises five elements 58a, 58b, 58c, 58d and 58e. The scattering light guide 50 may be produced by integral molding or assembling of the respective molded elements.

The elements 58a, 58b, 58c and 58d are identical in size and construction, each of the elements having a corner CR, a uniform thickness part and a wedge part. For example, reference numeral 58a' denotes a uniform thickness part of the element 58a, and 58a" a wedge part of the element 58a. The wedge part 58a" shaped in circular ring as a whole (the reference numeral is described only as to the element 58a) is formed in such a manner that the thickness reduces gradually toward the center axis K, being continued to the center uniform thickness part 58e.

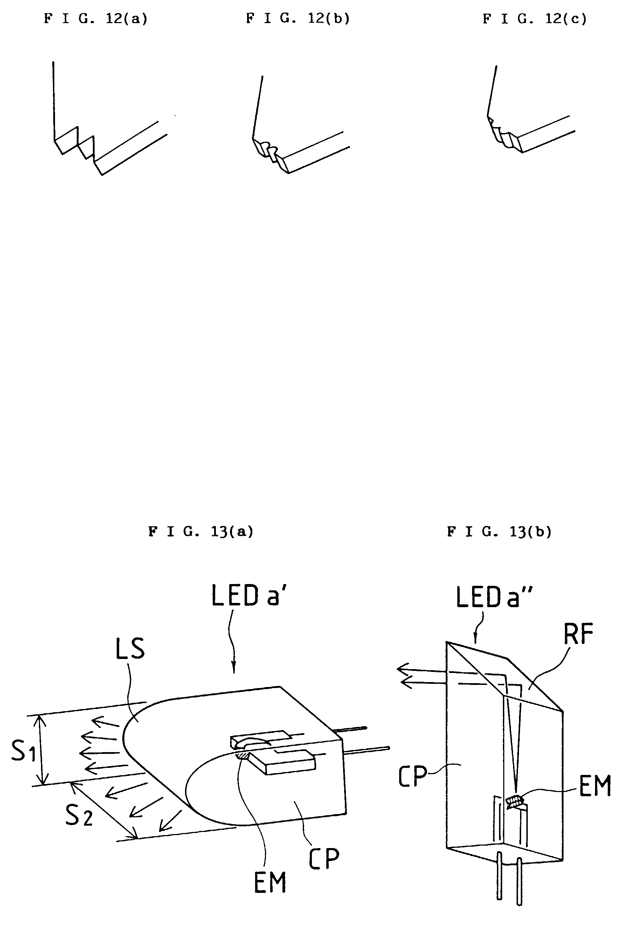

Four light source elements (LED, small-sized incandescence lamp, etc.) La - Ld are arranged in the vicinity of the respective corners CR. Cuts, such as to be illustrated in Figs. 12a - 12c are formed on the surfaces of the respective corners CR in order to improve the efficiency of optical coupling. The stipples 57 are formed on a part of the center uniform thickness part 58e by blast processing.

The light radiated from the light source elements La - Ld are introduced from the respective corners CR to the uniform thickness part 58a', and the greater part thereof reach the wedge part 58a. In the wedge part 58a", due to the same principle as that explained in the first embodiment with reference to Fig. 7, the light exits to the front side of the scattering light guide, thereby providing a shining part 56 as shown in Fig. 10b. Moreover, the remaining light passing through the wedge part 58a" travels to the center uniform thickness portion 58e and then exits at the portion corresponding to the stipples 57 to the front side of the scattering light guide, so that the shining part 57' is formed. The part of the scattering light guide 50 except the wedge part 58" may be made of a transparent material.

The second embodiment explained above also is advantageous to give a small depth size to the display panel. Moreover, light exiting is prevented intensively except in the portion (i.e. wedge part and stipples) which requires displaying light.

The third embodiment corresponds to a modification of the above second embodiment.

Fig. 11a is a view of the main part of the third embodiment viewing from the back side thereto and Fig. 11b is a view of the same main part viewing from the front side thereof. The scattering light guide 50 used in this embodiment comprises five elements 59a, 59b, 59c, 58d and 59e. The scattering light guide 50 may be produced by integral molding or assembling of the respective molded elements.

The elements 59a, 59b, 59c and 59d are identical in size and construction, each of the elements having a corner CR, a uniform thickness part and a wedge part. For example, reference numeral 59' denotes a uniform thickness part of the element 59a, and 59a" a wedge part of the element 59a. The wedge part 59" (reference numerals are denoted only as to the element 59a, hereafter) is formed in such a manner that the thickness reduces gradually toward the center axis K, being continued to the center uniform thickness part 59e.

Total four light source elements (LED, small-sized incandescent lamp, etc.) La - Ld are arranged in the vicinity of the respective corners CR. Cuts, such as illustrated in Figs. 12a - 12c are formed on the surfaces of the respective corners CR in order to improve the efficiency of optical coupling. The stipples 57 are formed on a part of the center uniform thickness part 58e by blasting processing.

The light radiated from the light source elements La - Ld are introduced from the respective corners CR to the uniform thickness part 59a', the greater part thereof reaching the wedge part 59a. In the wedge part 59a", due to the same principle as explained in the first embodiment with reference to Fig. 7, the light exits to the front side of the scattering light guide, thereby providing a shining part 56 as shown in Fig. 11b. Moreover, the remaining light passing through the wedge part 59a" travels at the center uniform thickness part 59e and exits at the portion corresponding to the stipples 57 to the front side of the scattering light guide, so that the shining part 57' is formed. The part of the scattering light guide 50 except the wedge part 59" may be made of a transparent material.

Similarly to that of the second embodiment, the third embodiment explained above also is advantageous to give a small depth size to the display panel exiting. Moreover, light is prevented intensively except the portion (i.e. wedge part and stipples) which requires the displaying light.

In a case where the light guide is optically coupled with the primary light source at the corner CR as the above-mentioned second embodiment and the third embodiment, the efficiency of the optical coupling can be improved by devising the light source elements La - Ld used as primary light source means.

Figs. 13a and 13b show two examples in which a cap construction of a light emitting diode (LED) is improved to be realized. In the example shown in Fig. 13a, it is preferable that the cap part CP of LEDa' is flat and the thickness s1 thereof is the same as that of the corner CR of the scattering light guide 50, and further the width thereof is the same as that of the corner CR (width of the cut forming part) of the scattering light guide 50. The leading end of the cap forms a cylindrical lens part LS.

The light flux radiated forward from the light emitting part Em with a diffusion to some extent the diffusion in the thickness direction is controlled by the cylindrical lens part LS, thereby being converted into the flat light flux. Accordingly, when the LEDa' is arranged in the vicinity of the respective corners CR of the scattering light guide 50 so as align to them, the light can be supplied into the scattering light guide efficiently along the direction of the scattering light guide.

In the example shown in Fig. 13b, the cap part CP of the LEDa" is shaped in a rectangular column and an inclined flat shape sideward reflecting part RF is disposed at a leading end of the cap part CP. The light flux radiated forward from the light emitting part EM of the LEDa" is reflected at the sideward reflecting part RF, then converted to the light flux directed sideward. Since the reflection occurs on the side of the high refractive index material in the sideward reflecting part RF, the greater part of the light can be totally reflected due to the same reason as that described in Fig. 9.

When such a LEDa" is arranged in the vicinity of the respective corners CR of the scattering light guide 50 so as to align to the light guide, the light can be supplied into the scattering light guide.

Next, the fourth embodiment which is preferable in a case where it is enough that the shining part is formed only on a peripheral portion of a display panel for speed meter is described. In this embodiment, since the difference from the first embodiment resides only in the optical coupling of a scattering light guide and a primary light source, the illustration and the explanation of the other features are omitted.

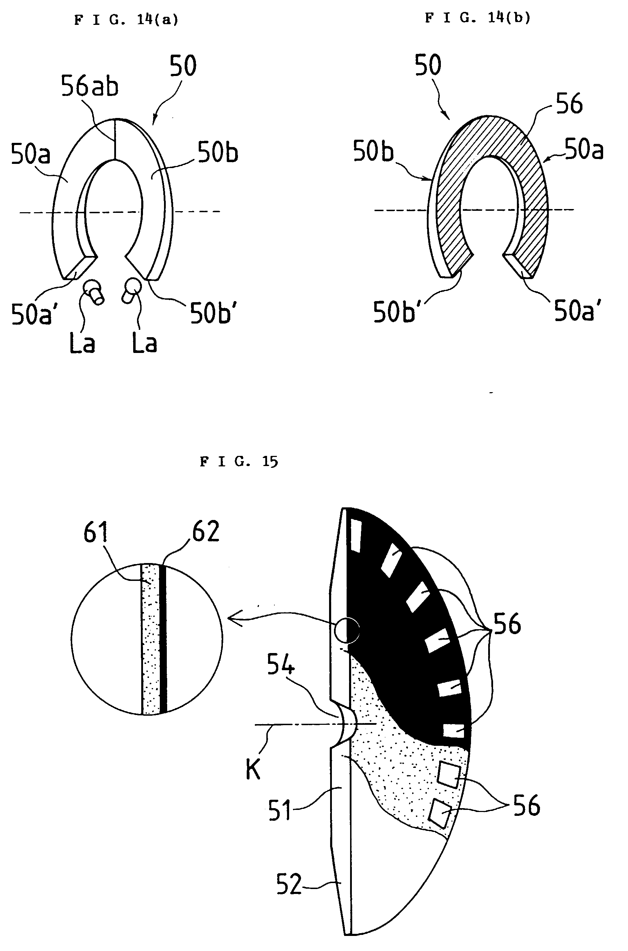

Fig. 14a is a view of the main part of the fourth embodiment viewing from the back side and Fig. 14b is a view of the same main part viewing from the front side thereof. The scattering light guide 50 used in this embodiment comprises two U-shaped elements 50a, 50b. The scattering light guide 50 may be produced by integral molding or assembling of the respective molded elements.

The both elements 50a, 50b are identical in size, and the shape is in a mirror image manner. The thickness of both of the elements 50a, 50b reduce gradually from end surfaces 50a', 50b' for the optical coupling, both of them being connected to each other at the thinnest part 50ab. Reference symbol K denotes a center axis of the display panel.

The light radiated from two light source elements La, Lb arranged in the vicinity of the end surfaces 50a', 50 b' is introduced into respective elements 50a, 50b, then guided toward the thinnest part 50ab from both of them. In this process, the light exits to the front side of the scattering light guide due to the same principle as that explained in the first embodiment with reference to Fig. 7, and the shining part 56 shown in Fig. 12b is formed.

The fourth embodiment explained above is advantageous to give a small depth size to the display panel. Further, light is prevented intensively except the portion which requires the displaying light. Moreover, the cuts which are the same as that shown in Figs. 12a - 12c may be formed at the end surfaces 50a', 50b' in order to improve the efficiency of the optical coupling at the end surfaces 50a', 50b'. The above-mentioned LEDs shown in Figs. 13a and 13b may be used for the light source elements La, Lb.

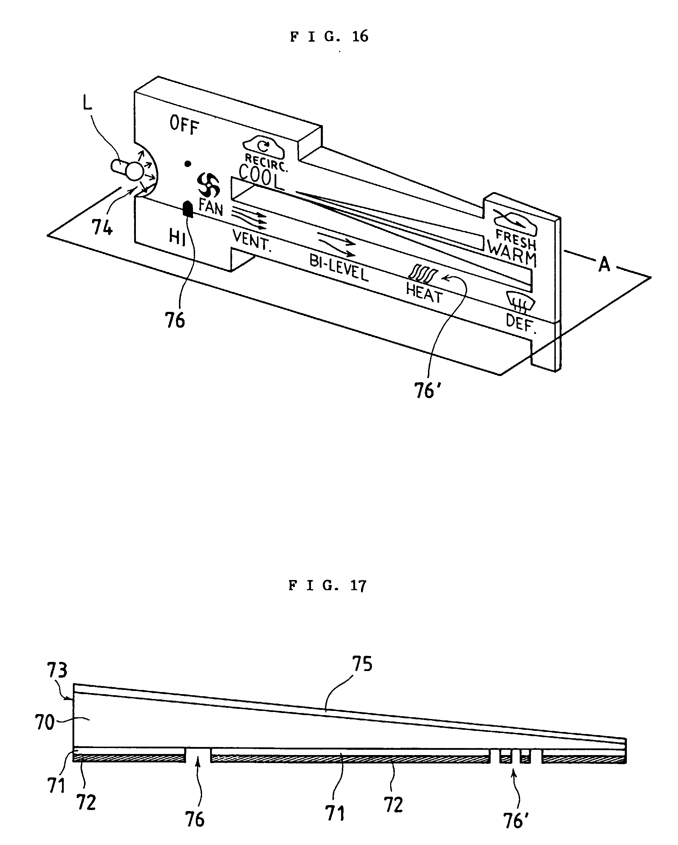

As means for ensuring sufficiently the quantity of light which contributes to the displaying, the coating layer of a low refractive index material (ink, paint, etc.) may be used in addition to the shape (especially, transition of thickness) of the scattering light guide which constitutes the light guiding plate. The fifth embodiment and the sixth embodiment in which this idea is applied to the display panel for speed meter and the operating portion of air conditioner are described with reference to Figs. 15 and 16.

Fig. 15 is a partially cutaway view and a partially enlarged sectional view of a display panel of a fifth embodiment. Since the arrangement of the light source element and the construction of the elements except the scattering light guide of the display panel, etc., are the same as those of the first embodiment, the illustration and detailed explanation for them are omitted. However, it should be noted that the transparent sheet 60 used in the first embodiment is not used in the fifth embodiment.

In Fig. 15, the light guide used in the display panel is constituted of the scattering light guide 50 shaped in a disk having the center at the axis K, similarly to the first embodiment. The scattering light guide 50 is constituted of the center portion 51 having a uniform thickness and the peripheral portion 52 shaped in a taper reducing in thickness in the radial direction. A hole 54 for the pointer is formed at the center of the center portion 51. An appropriate number of the light source receiving holes (not shown) are formed around the hole 54.

As shown in the enlarged sectional view for the circle part, the coating layer 61 having a refractive index lower than that of the matrix of the scattering light guide 50 is formed on the displaying surface of the scattering light guide 50 except the portion for the shining part 56. For example, the ink made of a fluorine type material is preferable as the material of the coating layer 61, since it has a relatively low refractive index. The layer 62 formed outside the coating layer 61 is a light shielding ink layer having a background color of the display panel. The layers 61, 62 are not formed on the portion corresponding to the shining part 56 where the surface of the scattering light guide 50 should be exposed.

However, a transparent ink layer may be applied in response to the requirement of the displaying color. On this occasion, it is preferable to use an ink layer having a refractive index higher than that of the matrix of the scattering light guide 50, so as to avoid reduction in brightness of the shining part 56.

An important feature of this embodiment resides in that the light is prevented from leaking due to the presence of the coating layer 61 having a refractive index lower than that of the matrix of the scattering light guide 50. That is, it is general that many inks are higher in refractive index than the material (acryl resin, etc.) of the light guiding plate (scattering light guide 50). Accordingly, in a case where the display information is put directly on the light guiding plate, the light exiting from the light guiding plate is easily absorbed, so that a less bright shining part is obtained.

On the contrary, in this embodiment, the light is held in the scattering light guide 50 by the coating layer 61 of low refractive index not only in the uniform thickness part 51 but also in the taper shape periphery portion 52. Accordingly, the light is prevented from leaking out through the boundary of the scattering light guide 50 and the coating layer 61, thereby the absorption loss being avoided. As a result, the strong light which contributes to the displaying exits concentratedly from the portion at which the layers 61, 62 do not exist, so that the bright shining part 52 is formed. Then, the transparent sheet (see reference numeral 60 in Fig. 1) on which the display information is put is omitted without reducing the brightness of the display.

Fig. 16 is a perspective view showing the sixth embodiment in which the invention is applied to a display panel of the operating portion for an air conditioner. Further, Fig. 17 is a simplified sectional view taken along the plane shown by the symbol A in Fig. 16. In this embodiment, the scattering light guide 70 constituting a back light illuminating part is shaped in a wedge over the total length thereof. A semi-circle cut part 74 which receive the whole or a part of the light source element L is formed on the thick side end part 73.

A coating layer 71 having a refractive index lower than that of the matrix of the scattering light guide 70 is formed by using, for example, a fluorine type ink on the displaying surface side of the scattering light guide 70 except the portion for shining part. The layer 72 formed outside the coating layer 71 is a light shielding ink layer having a background color of the display panel. In Fig. 17, two portions denoted by reference numerals 76, 76' are exemplified as the examples of the portion corresponding to the shining part.

The coating layers 71, 72 are not formed on the portion corresponding to the shining parts 76, 76' (and other parts for letters, figures, etc.), with the surface of the scattering light guide 50 exposed.

Accordingly, the light is held effectively in the scattering light guide due to the same reason similar to that of the sixth embodiment, thereby the light being prevented from leaking the through the boundary of the scattering light guide 70 and the coating layer 71, and the absorbing loss being avoided. As a result, the strong light which contributes to the displaying exits concentratedly from the portion at which the layers 71, 72 do not exist, so that the bright shining part 52 is formed.

An air layer may exist on the back side of the scattering light guide 70 and the low refractive index coating layer 75 made of the same material as that of the front side may be formed thereon. Instead of the air layer and the coating layer, a reflecting body made of silver, aluminum, a white reflective sheet, etc., may be arranged thereon.

Finally, compositions of scattering light guides used in display panels according to the invention and producing methods thereof are explained supplementarily. As described in the first embodiment, generally, the scattering light guide 50 is made of a material having refractive index ununiform structures uniformly dispersed in a matrix of the transparent resin. Examples of the resin matrix are shown in Tables 1 and 2.

In one example described already, particles (particle diameter of 2µm) made of a silicone type resin as different refractive index particles are dispersed uniformly at a rate of 0.07wt% in the matrix made of poly (methyl methacrylate) (PMMA). Hereinafter, there are described some of the examples of preferable composition and manufacturing/forming methods.

### [Example 1] (described in the first embodiment);

Resin matrix; poly (methyl methacrylate) (PMMA)

Kind of dispersed fine particles; silicone type fine particle

Particle diameter and content; 2µm, 0.07wt%

Molding method; casting polymerization, biaxial extrusion molding

### [Example 2];

Resin matrix; poly (methyl methacrylate) (PMMA)

Kind of dispersed fine particles; glass beads

Particle diameter and content; 8µm, 0.06wt%

Molding method; casting polymerization, biaxial extrusion molding

### [Example 3];

Resin matrix; poly (methyl methacrylate) (PMMA)

Kind of dispersed fine particles; styrene (St) bridging fine particle

Particle diameter and content; 8µm, 0.005wt%

Molding method; casting polymerization, biaxial extrusion molding

### [Example 4];

Resin matrix; polycarbonate (PC)

Kind of dispersed fine particles; silicone type fine particle

Particle diameter and content; 2µm, 0.01wt%

Molding method; kneading polymer and fine particle, biaxial extrusion molding

### [Example 5];

Resin matrix; polycarbonate (PC)

Kind of dispersed fine particles; poly (methyl methacrylate) (PMMA) bridging fine particle

Particle diameter and content; 8µm, 0.03wt%

Molding method; kneading polymer and fine particle, biaxial extrusion molding

### [Example 6];

Resin matrix; polycarbonate (PC)

Kind of dispersed fine particles; styrene (St) bridging fine particle

Particle diameter and content; 8µm, 1.7wt%

Molding method; kneading polymer and fine particle, biaxial extrusion molding

### [Example 7];

Resin matrix; polycarbonate (PC)

Kind of dispersed fine particles; glass bead

Particle diameter and content; 8µm, 0.02wt%

Molding method; kneading polymer and fine particle, biaxial extrusion molding

As described in detail above, if a display panel according to the present invention is applied to various kinds of the instruments installed in motorcars, airplanes, ships, etc., displaying light with a high efficiency is obtained and the depth size of display panel can be made small, while manufacturing cost and electric power comsumption are reduced. Further, since the displaying is given by an exiting light from the scattering light guide of the display panel according to the invention, a soft displaying light which does not stimulate the eyes can be obtained without additional constructions such as light diffusing sheet, or the like.

It is to be understood that the invention may also be applicable to instruments in locations other than vehicles, for example in stationary equipment control panels, where it is desirable for the instrument to be illuminated.

## Claims

1. A display panel for an instrument, in which a shining part for displaying information is formed by using a primary light source means and a plate-shape light guide optically coupled to said primary light source means, wherein at least a part of the light guide is constituted by a scattering light guide which has a region tending to reduce in thickness as distance increases away from the position at which the optical coupling occurs, and at least a portion of the shining part is provided by light exiting from said region.

2. A display panel according to claim 1, wherein the optical coupling occurs in a hole or recess disposed in the light guide for receiving a primary light source means or for receiving light from a primary light source means.

3. A display panel according to claim 2, wherein a reflecting means for deflecting light to the direction of the scattering light guide is disposed in said hole or recess.

4. A display panel according to claim 1, wherein the optical coupling occurs at an edge of the scattering light guide.

5. A display panel according to claim 4, wherein a cut part for optical coupling is disposed on said edge.

6. A display panel according to any one of the preceding claims, wherein at least a part of that portion of the scattering light guide which does not correspond to said shining part is covered with a layer having a refractive index lower than that of the scattering light guide.

7. A display panel according to claim 6, wherein the outside of said layer is further covered with a light shielding layer.

8. A display panel according to claim 4, or any one of claims 5, 6 and 7 when appended to claim 4, wherein the primary light source means comprises a light emitting diode for generating an incident light flux coordinately directed to the scattering light guide.

9. A display panel according to any one of the preceding claims, for an instrument which is adapted to be installed in a vehicle.
